# EUROPEAN PATENT APPLICATION

(11) **EP 1 976 092 A1**
(43) Date of publication of application: **01.10.2008**
(21) Application number: 07445014.9
(22) Date of filing: 30.03.2007
(51) Int. Cl.: H02J 9/00

(54) **A power supply device**

(71) Applicant: ABB Technology Ltd, 8050 Zürich (CH)
(72) Inventor: Halvarsson, Per, 722 46 Västeras (SE)
(74) Representative: Estreen, Lars J.F.

(57) **Abstract**

A power supply device for high voltage comprises a first and a second voltage converter (20), wherein an electrical energy store (10) is connected to the DC side of the first voltage converter and a generator (40) supplies power.

## Description

### FIELD OF INVENTION

The present invention relates to power supply devices in general and more particularly a high voltage power supply device which is more efficient and environmental friendly than prior art devices. The present invention also relates to a method of supplying power.

### BACKGROUND

The reliability of today's power distribution systems is generally high. This means that periods of power failure are rare and they are often short, i.e., less than one second, when they appear. This is acceptable for most applications and is built into the design of the power distribution systems. This means that achieving completely failure free distribution of electrical power with current power distribution systems is almost impossible.

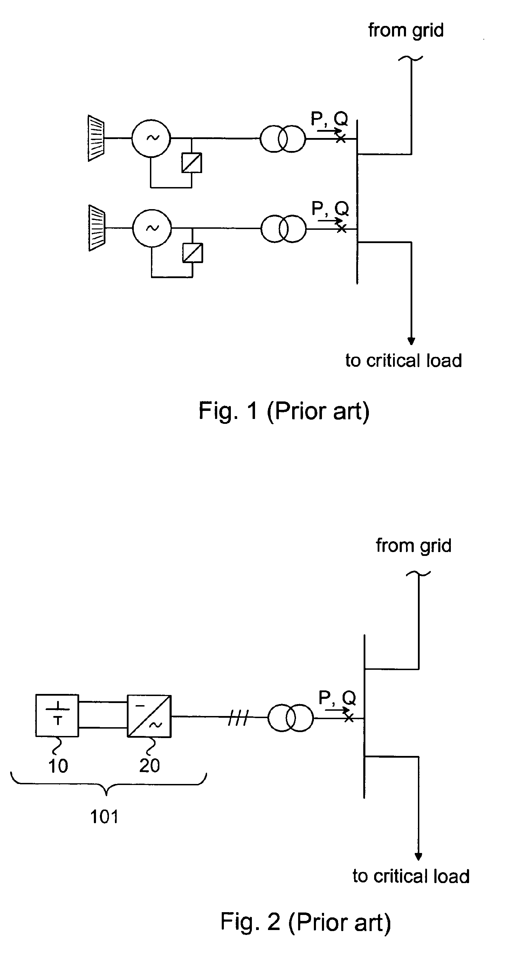

However, there are highly critical loads, such as semiconductor or pharmaceutical factories, oil refineries and gas compressing plants, wherein each power failure or disruption is very costly and therefore unacceptable. The electrical power supply to highly critical loads is therefore often arranged through a highly reliable power supply, which essentially eliminates the risk of power failures. These highly reliable power supplies, which conventionally are provided close to the load, can comprise one or preferably two or more electrical power generators, such as gas turbines operating as generators of electrical energy. Such a prior art system is schematically shown in Fig. 1, wherein two generators are connected in parallel to a critical load.

One drawback with this kind of highly reliable power supplies is however that they are not very efficient and environmental friendly. The nature of these generators, i.e., that they cannot supply momentary power unless they are already running, is such that they must be operated more or less continuously. Also, the fuel used for gas turbine emits large amounts of hydrocarbons. Furthermore, when two or more turbines are run in parallel, such as in the example of Fig. 1, then each of the turbines is operated at non-optimum speed, further reducing the efficiency of the system.

It is known to provide a voltage source converter (VSC) supplying reactive power to a power distribution system to provide for voltage control and stability, i.e., to keep the voltage of the power distribution lines within set limits. A prior art power supply device or unit, generally referenced 101, is schematically shown in Fig. 2. The device 101 comprises an electrical energy store 10, such as a high voltage battery connected to the DC side of a three-phase voltage converter 20. This kind of solution is disclosed in the article "Voltage Source Converter based Power Quality Solutions" by Olivier Suter, Michael Buschmann, Gerhard Linhofer, and Philippe Maibach, Asia Pacific Regional Power Quality Seminar, 28-31 March 2005, Marriot Putrajaya, Malaysia.

### SUMMARY OF THE INVENTION

An object of the present invention is to provide a power supply device acting a power backup in case of failure of an electrical power distribution network or as a stand-alone power supply for highly critical loads.

The invention is based on the realization that a reactive power supply device, such as a voltage source converter, in combination with an energy store, such as a battery, and a generator can be combined into a unit that provides power backup for both active and reactive power to highly critical loads.

According to a first aspect of the invention an electrical power supply device for high voltage is provided comprising a voltage converter having an AC side and a DC side; an electrical energy store connected to the DC side of the voltage converter, the power supply device being characterized by a second voltage converter having an AC side and a DC side, wherein the DC sides of the first and second voltage converters are interconnected and wherein the electrical energy store is connected to lines interconnecting the voltage converters, and an electrical power generator, which is connected to the AC side of the second voltage converter. The power supply device can thereby supply electrical energy during prolonged periods of time or even act as a stand-alone power supply device.

In the case the power supply device is used stand-alone, it is preferred to connect in parallel two sets of power supply devices to further improve the reliability.

In a preferred embodiment, the electrical power generator is a gas turbine.

According to a second aspect of the invention a method of supplying high voltage power is provided, comprising the following steps: providing a first voltage converter having an AC side and a DC side, connecting an electrical energy store to the DC side of the first voltage converter, and operating the first voltage converter to supply electrical power on the AC side thereof, the method being characterized by providing a second voltage converter having an AC side and a DC side, wherein, interconnecting the DC sides of the first and second voltage converters, connecting the electrical energy store to lines interconnecting the voltage converters, connecting an electrical power generator to the AC side of the second voltage converter, upon detecting power failure, powering up the electrical power generator, supplying electrical power from the electrical energy store to the AC side of the first voltage converter during the power up time of the electrical power generator, and supplying electrical power from the electrical power generator after the power up time thereof.

Further preferred embodiments are defined by the dependent claims.

### BRIEF DESCRIPTION OF DRAWINGS

Other features and advantages of the present invention will become more apparent to a person skilled in the art from the following detailed description in conjunction with the appended drawings in which:
Fig. 1 is an overall diagram of a prior art power supply device;
Fig. 2 is an overall diagram of another prior art power supply device;
Fig. 3 is an overall diagram of a first embodiment of a power supply device according to the invention;
Fig. 4 is a diagram of the battery configuration of a power supply device according to the invention;
Fig. 5 is an overall diagram of a second embodiment of a power supply device according to the invention; and
Fig. 6 is an overall diagram of a third embodiment of a power supply device according to the invention.

### DETAILED DESCRIPTION OF PREFERRED EMBODIMENTS

In the following a detailed description of preferred embodiments of the present invention will be given. In this description, the term "high voltage" will be used for voltages of 1kV and higher.

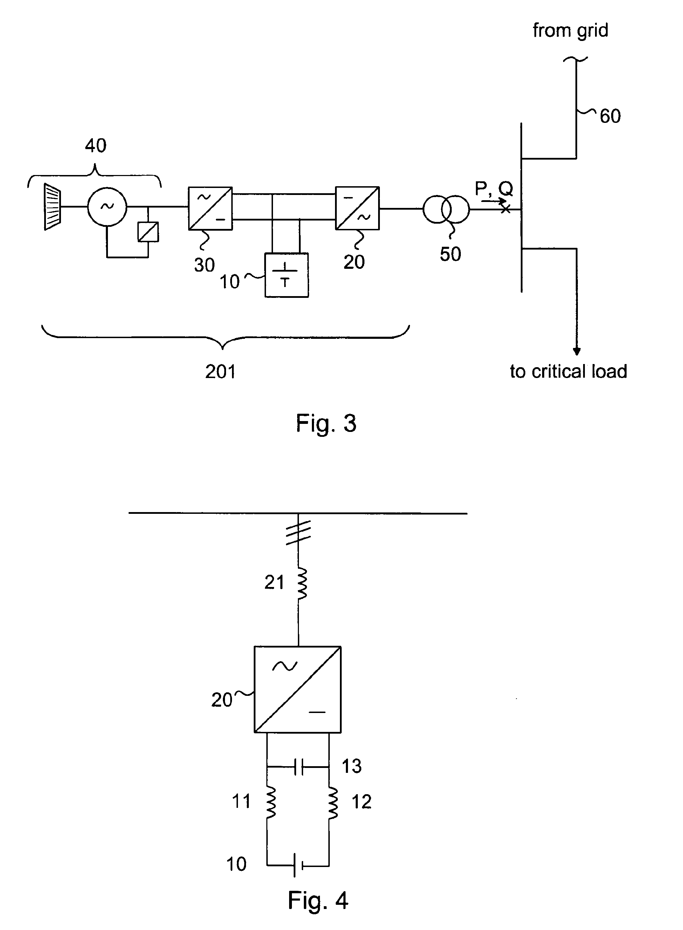

Fig. 3 shows a first embodiment of a power supply device, generally designated 201. This embodiment is similar the prior art device shown in Fig. 2 in that it comprises a high voltage battery 10 connected to the DC side of a three-phase voltage converter 20. However, this second embodiment also comprises an additional, second three-phase high voltage converter 30, which is connected back-to-back to the first voltage converter 20. In other words, the DC sides of the two voltage converters 20, 30 are interconnected and the high voltage battery 10 is connected to the lines interconnecting the voltage converters.

The voltage converter 20 is preferably of the general kind that is used with a voltage source converter (VSC), such as the VSC manufactured by ABB Corporation and marketed under the name STATCOM. It comprises transistors, preferably insulated-gate bipolar transistor (IGBT) power semi-conductors for switching (with frequencies up to 1.5 kHz), which enables quick response, filtering etc.

The electrical energy store 10 is preferably dimensioned so that it can provide a high voltage of at least 1 kV, and more preferably at least 10 kV, and deliver electrical power of at least 1 MW, more preferably at least 10 MW, and even more preferably at least 100 MW during at least 5 minutes, and more preferably during at least 20 minutes, and even more preferably during at least 30 minutes. The battery preferably comprises a plurality - up to several thousands - of serially connected battery cells to achieve the high voltages required for this application. The cells are preferably designed so that if one cell malfunctions, then it is short circuited, resulting in continued operation of the battery, albeit at a slightly lower voltage level. An example of a battery which can be used is the one manufactured by the company MES-Dea under the trade mark ZEBRA^{™}.

The power supply device 201 additionally comprises a generator of electrical power, generally designated 40, which can be a gas turbine, for example. The output of this electrical power generator is connected to the AC side of the second voltage converter.

A transformer 50 is shown connected between the power supply device 201 and a distribution line 60, to which a highly critical load is connected. This transformer is only necessary if the line voltage is so high, such as 36 kV, that the power supply device is unable to reach this voltage level without step-up transforming.

An overall control system (not shown) controls the power supply device during operation thereof.

An example of a circuit configuration between the high voltage battery 10 and the voltage converter 20 is shown in Fig. 4. Inductors 11, 12 are provided for smoothing the current delivered by the battery while a small capacitor 13, having a charging capacity of for example 5 ms, takes care of commutation in the voltage converter. An inductor 21 is provided at the AC side of the voltage converter. The voltage difference between the AC side of the voltage converter and the network drives a current through this inductor.

This configuration can advantageously be used as follows. The combination of the battery 10 and the first voltage converter 20 is used like in the above described prior art device of Fig. 2 to supply electrical power to a highly critical load in case of power failure on the power distribution network. As soon as the power failure is detected, then the electrical power generator 40 begins to power up from a cold standby condition. The battery 10 supplies the highly critical load with the required power during the power up time of the generator. It is also preferred that the battery 10 supplies electrical power to the generator 40 during startup thereof in the case the generator is a gas turbine. This essentially means that the generator runs as a motor during startup, eliminating the need of a pony motor as conventional; when operating speed has been reached then the gas turbine begins running as a generator.

When the generator is operational after its power up time, it begins to deliver electrical power to the highly critical load. This is effected by supplying the AC side of the second voltage converter 30 with AC power, which is rectified by the second voltage converter 30 and transmitted to the first voltage converter 20, which in turn converts the power to three-phase AC power, which is supplied to the highly critical load.

The magnetization of the power generator 40 determines the amount of generated reactive power in the generator. However, it is preferred to have the generator deliver as much active power as possible since the converter arrangement can supply the required reactive power.

By using the back-to-back configuration of the two voltage converters 20, 30, the speed of the generator 40 is essentially independent of the frequency of the power distribution network since the voltage from the generator is first converted to DC voltage and then again converted to AC voltage. This in turn means that the generator can run at optimum speed when considering efficiency, resulting in a more efficient overall system.

Since the battery 10 takes care of the delivery of momentary electrical power during failure of the power distribution network, the generator 10 can be in cold standby most of the times.

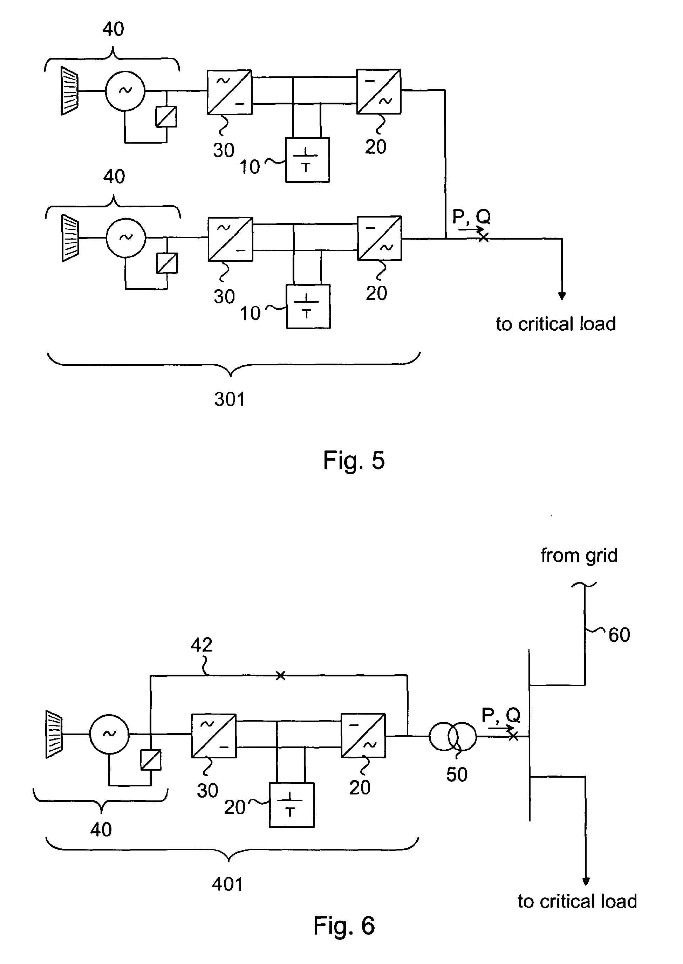

In Fig. 3, the power supply device 201 is connected to a power distribution network 60, to which a highly critical load is connected. It will be appreciated that the power supply device can be connected directly to the highly critical load without an intervening power distribution network. This is the case in Fig. 5, which shows a second embodiment of a power supply device 301, which is directly connected to a highly critical load, such as an off-shore oil platform. In this embodiment, all functions of the power supply device 301 are doubled, i.e., it essentially comprises two parallel connected power supply devices 201 shown in Fig. 4.

The dual configuration shown in Fig. 5 ensures high security against unwanted power failure. It is in this case preferred that one of the generators 40 is run at an efficient operational speed and the other one is on cold standby.

It is realized that the second embodiment 301 can be connected to an electrical distribution network as well and not just operate as a stand-alone power supply device.

Fig. 6 shows a third embodiment of a power supply device, generally designated 301. This embodiment is similar the one shown in Fig. 4 in that it comprises a high voltage battery 10 connected to the DC side of a first three-phase voltage converter 20, a second three-phase high voltage converter 30, which is connected back-to-back with the first voltage converter 20, and a generator of electrical power 40. However, in this embodiment the power supply device is provided with a bypass line 42 for the generator 40. By means of this bypass line, the generator 40 can be connected directly to the distribution network in case of breakdown of one or both of the voltage converters 20, 30.

Preferred embodiments of a power supply device have been described. It will be realized that these can be varied within the scope of the appended claims. Thus, the generator 40 can be something different than a gas turbine, such as a diesel generator.

The electrical energy store has been described as a battery. It will be appreciated that this store also could comprise a large capacitor, which is charged in some suitable way to supply power in case of power failure.

## Claims

1. A high voltage power supply device comprising:
- a first voltage converter (20) having an AC side and a DC side;
- an electrical energy store (10) connected to the DC side of the first voltage converter (20),
**characterized by**
- a second voltage converter (30) having an AC side and a DC side, wherein the DC sides of the first and second voltage converters (20, 30) are interconnected and wherein the electrical energy store (10) is connected to lines interconnecting the voltage converters, and
- an electrical power generator (40), which is connected to the AC side of the second voltage converter (30).

2. The power supply device according to claim 1, comprising an additional power supply device (201) according to claim 2 connected in parallel with the power supply device.

3. The power supply device according to claim 1, comprising a bypass line (42) for the generator (40) by means of which the generator is connectable directly to a distribution network (60).

4. The power supply device according to any of claims 1-3, wherein the voltage converters (20, 30) are voltage source converters.

5. The power supply device according any of claims 1-4, wherein the electrical energy store is a high voltage battery (10).

6. The power supply device according to any of claims 1-5, wherein the AC side of the first voltage converter (20) is designed to provide at least 1 kV, and more preferably at least 10 kV.

7. The power supply device according to any of claims 1-6, wherein the electrical energy store (10) is designed to provide at least 1 MW, and more preferably at least 10 MW, and even more preferably at least 100 MW.

8. The power supply device according to any of claims 1-7, wherein the electrical energy store (10) is designed to provide energy during at least 5 minutes, and more preferably during at least 20 minutes, and even more preferably during at least 30 minutes.

9. The power supply device according to any of claims 1-8, wherein at least the first voltage converter is a three-phase voltage converter.

10. The power supply device according to any of claims 1-9, wherein the electrical power generator is a gas turbine (40).

11. A method of supplying high voltage power, comprising the following steps:
- providing a first voltage converter (20) having an AC side and a DC side,
- connecting an electrical energy store (10) to the DC side of the first voltage converter (20), and
- operating the first voltage converter to supply electrical power on the AC side thereof,
**characterized by**
- providing a second voltage converter (30) having an AC side and a DC side,
- interconnecting the DC sides of the first and second voltage converters (20, 30),
- connecting the electrical energy store (10) to lines interconnecting the voltage converters,
- connecting an electrical power generator (40) to the AC side of the second voltage converter (30),
- upon detecting power failure, powering up the electrical power generator (40),
- supplying electrical power from the electrical energy store (10) to the AC side of the first voltage converter (20) during the power up time of the electrical power generator, and
- supplying electrical power from the electrical power generator after the power up time thereof.

12. The method according to claim 11, comprising the additional steps of supplying electrical power to the electrical power generator (40) from the electrical energy store (10) during startup of the power generator.
